# FASCICULE DE BREVET EUROPEEN

(11) **EP 2 593 315 B1**
(45) Date de publication et mention de la délivrance du brevet: **09.12.2015**
(21) Numéro de dépôt: 11744032.1
(22) Date de dépôt: 29.06.2011
(51) Int. Cl.: B60B 7/00, B60B 7/06, B60B 33/00

(54) **ROULETTE AVEC FLASQUE**
FLANSCHROLLE
FLANGED ROLLER

(30) Priorité: 06.12.2010 FR 1004731; 12.07.2010 FR 1002917
(43) Date de publication de la demande: 22.05.2013
(73) Titulaire: TENTE ROULETTES POLYMERES-BRUANDET, 39700 La Barre (FR)
(72) Inventeur: DAYT, Patrick, F-25000 Besançon (FR)
(74) Mandataire: Flavenot, Bernard
(86) Numéro de dépôt international: PCT/FR2011/000375
(87) Numéro de publication internationale: WO 2012/007652

(56) Documents cités:
- EP-A2- 1 543 996
- EP-A2- 1 736 325
- WO-A1-98/18637
- US-A1- 2003 178 888

## Description

La présente invention concerne les roulettes avec flasque de protection et/ou enjoliveur qui sont couramment utilisées pour faciliter le déplacement d'objets comme des meubles, bagages ou analogues.

Il est connu, dans de nombreux domaines, des roues ou roulettes dont le moyeu est recouvert d'un flasque de protection et/ou enjoliveur.

En général, ces flasques sont fixés par des moyens de boulonnage ou autre, ou par des pattes élastiques, et lorsque les roues sont de relativement grande dimension, ces flasques sont facilement clipsables sur les moyeux des roues et restent clipsés même lorsque les roues sont soumises à des chocs relativement importants. Tel est le cas par exemple des flasques pour des roues de véhicules automobiles.

En revanche, pour des roues du type roulettes comme celles qui sont utilisées pour le déplacement d'objets tels que des meubles, et plus particulièrement des bagages ou analogues, la fixation de flasques sur les moyeux de ces roulettes pose problème, ainsi que leur tenue, notamment lorsque ces roulettes sont montées sur des bagages qui sont souvent déplacés sans ménagement et qu'elles butent plus ou moins violemment contre des marches ou analogues.

De telles roulettes selon l'art antérieur sont par exemple décrites dans le WO 2009/141685 et le US 2003/178888.

La roulette selon le WO 2009/141685 comporte des clips qui s'accrochent sur le bord situé à la périphérie du moyeu, donc en relation directe avec la bande de roulement de la roue et qui sont donc aptes à être soumis directement aux chocs, ce qui peut entraîner l'inconvénient mentionné ci-dessus.

Quant à la roulette selon le US 2003/178888, qui comporte les caractéristiques du préambule de la revendication 1, elle comporte un flasque extérieur fixé sur le moyeu et un flasque intermédiaire pris en sandwich entre le moyeu et le flasque extérieur et qui est principalement fixé sur le flasque extérieur, ce qui peut entraîner les mêmes inconvénients que ceux mentionnés ci-avant.

Peuvent également être cités les deux autres documents antérieurs suivants : le US 2003/178888 et le EP 1 736 325.

Aussi, la présente invention a-t-elle pour but de réaliser une roulette à moyeu et flasque monté sur ce moyeu, qui pallie en grande partie les inconvénients mentionnés ci-dessus des roulettes de ce type, tout en étant d'une structure relativement simple et peu onéreuse.

Plus précisément, la présente invention a pour objet une roulette pour faciliter le déplacement d'objets comme des meubles, bagages ou analogues, selon la revendication 1 annexée.

D'autres caractéristiques et avantages de l'invention apparaîtront au cours de la description suivante donnée en regard des dessins annexés à titre illustratif mais nullement limitatif, dans lesquels :
La figure 1 est une vue en perspective d'un mode de réalisation d'une roulette selon l'invention équipée d'un flasque de protection et/ou enjoliveur,
La figure 2 est une vue en perspective d'une étape du montage de la roulette selon la figure 1, permettant d'expliciter une partie de la structure de cette roulette,
La figure 3 est une vue partielle en perspective de la roulette à la fin de l'étape de montage illustrée sur la figure 2,
La figure 4 est une vue en perspective d'une autre étape du montage de la roulette effectuée après l'étape illustrée sur les figures 2 et 3, permettant d'expliciter une autre partie de la structure de cette roulette, et
La figure 5 est une vue partielle en perspective et en écorché de la roulette à la fin de l'étape de montage illustrée sur la figure 4.

Il est tout d'abord précisé que, sur les figures, les mêmes références désignent les mêmes éléments, quelle que soit la figure sur laquelle elles apparaissent et quelle que soit la forme de représentation de ces éléments.

Il est également précisé que, dans la présente description, si l'adverbe "sensiblement" est associé à un qualificatif d'un moyen donné, ce qualificatif doit être compris au sens strict ou approché.

En référence aux figures annexées, la présente invention est relative à une roulette Ro comme celles qui sont utilisées pour faciliter le déplacement d'objets comme des meubles, bagages ou analogues, notamment des valises.

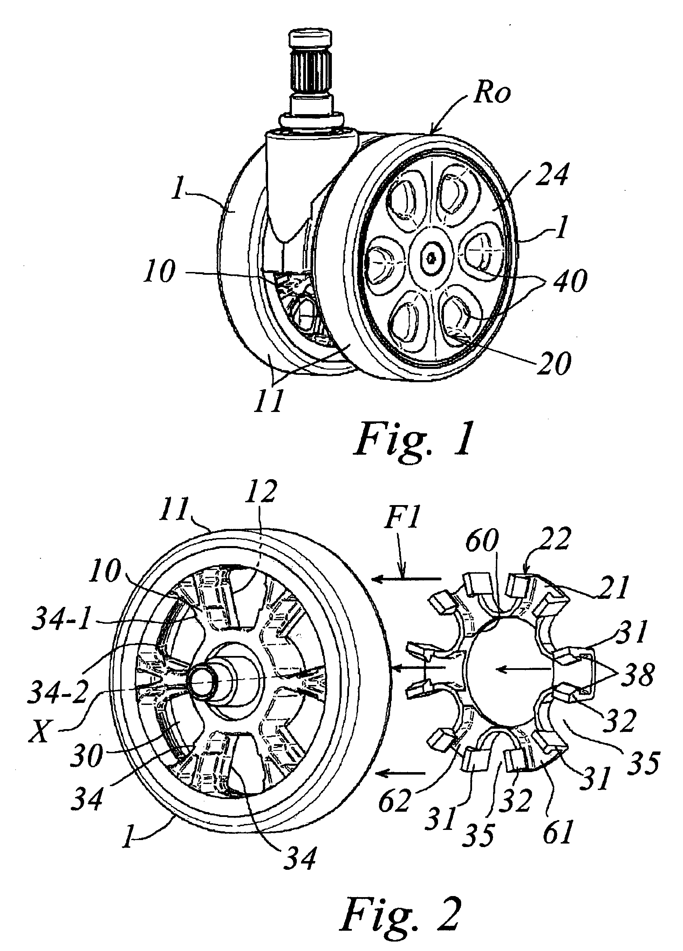

Dans le mode de réalisation illustré sur la figure 1, la roulette Ro comporte deux roues, mais l'invention peut s'appliquer à une roulette ne comportant qu'une seule roue, de sorte que la roulette Ro selon l'invention comporte au moins une roue 1 comprenant un moyeu 10 et une bande de roulement 11 située autour du moyeu 10 d'axe X, et des moyens de flasque 20 montés en recouvrement au moins partiel d'une face 12 du moyeu 10.

Selon une caractéristique de l'invention, ces moyens de flasque 20 comportent, comme plus particulièrement visible sur les figures 2, 3 et 4, au moins un flasque qui sera dit pour la compréhension de la présente description, "intermédiaire" 21 et des moyens de clipsage 22 aptes à clipser ce flasque intermédiaire sur la face 12 du moyeu 10.

La roulette peut comporter en outre un autre flasque dit "principal" 24, comme plus particulièrement visible sur les figures 1, 4 et 5, apte à recouvrir le flasque intermédiaire 21, et des moyens 26 pour solidariser de façon directe ce flasque principal 24 avec le flasque intermédiaire 21 quand ce flasque principal 24 recouvre le flasque intermédiaire 21, c'est-à-dire que le flasque intermédiaire 21 est bien situé entre la face 12 du moyeu 10 et le flasque principal 24.

Selon une autre caractéristique importante de l'invention, la roulette comporte en outre des moyens 28 pour bloquer les moyens de clipsage 22 sur le moyeu 10 quand le flasque intermédiaire 21 est clipsé sur la face 12 du moyeu 10 et quand le flasque principal 24 recouvre le flasque intermédiaire 21 et est solidarisé avec lui.

Cette technique est très préférentielle quand le flasque intermédiaire 21 et le flasque principal 24 sont en des matériaux différents, comme il sera explicité plus en détail ci-après.

Selon une caractéristique principale et avantageuse de l'invention, les moyens de clipsage 22 du flasque intermédiaire 21 sur la face 12 du moyeu 10, qu'il soit seul ou associé au flasque principal 24, comportent au moins une percée 30 réalisée dans le moyeu 10 et délimitée par un bord 34 comportant au moins une première portion de bord 34-1 et une seconde portion de bord 34-2 opposées, ces deux portions de bord ayant une direction radiale par référence à l'axe X du moyeu 10, ou sensiblement radiale ou assimilable à une telle direction, au moins deux crochets 31, 32 montés en saillie sur le flasque intermédiaire 21 de façon que, lorsque le flasque intermédiaire 21 est clipsé sur la face 12 du moyeu 10, les deux crochets 31, 32 s'accrochent, par déformation élastique, sur respectivement les première et seconde portions de bord radiales 34-1, 34-2 de la percée 30 en définissant entre eux un espace libre inter-crochets 35.

Comme plus particulièrement visible sur la figure 2, les deux crochets 31, 32 sont avantageusement situés dans deux plans sensiblement radiaux, toujours par référence à l'axe X du moyeu 10, et sont disposés respectivement sur deux prolongations 61, 62, situées à la périphérie de la partie centrale 60 (évidée ou pleine) du flasque intermédiaire 21 et sensiblement dans son plan, pour définir entre elles un espace libre sensiblement en forme de U.

Selon un mode de réalisation préférentiel, les moyens 28 pour bloquer les moyens de clipsage 22 sur le moyeu 10, quand la roulette comprend en plus le flasque principal 24, comportent une excroissance 40 en saillie sur ce flasque principal 24 et agencée de façon que, lorsque ce flasque principal est solidarisé avec le flasque intermédiaire, elle se loge dans l'espace libre inter-crochets 35 et vient au contact des deux crochets 31, 32 pour les bloquer sur le bord 34 de la percée 30 et les empêcher de se décrocher de ce bord 34.

Selon une réalisation préférentielle, chaque crochet 31, 32 est constitué d'une patte élastique 36, 37 solidaire, par une première extrémité, du flasque intermédiaire via une prolongation 61, 62, et d'un ardillon 38 solidaire de la seconde extrémité de la patte 36, 37 opposée à la première extrémité, cet ardillon étant agencé sur la patte pour venir se placer derrière le bord 34 de la percée 30.

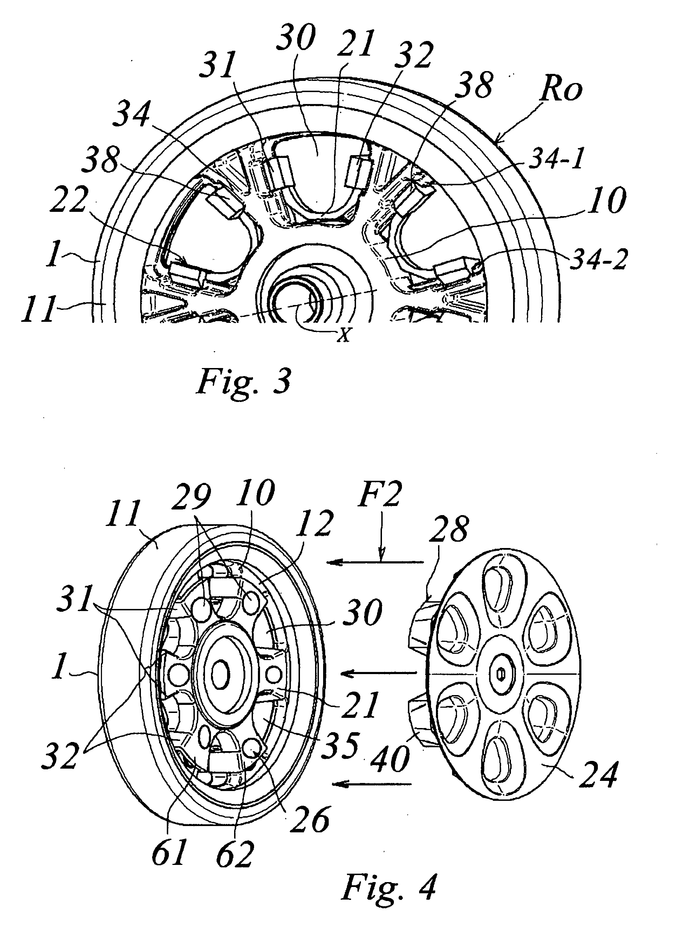

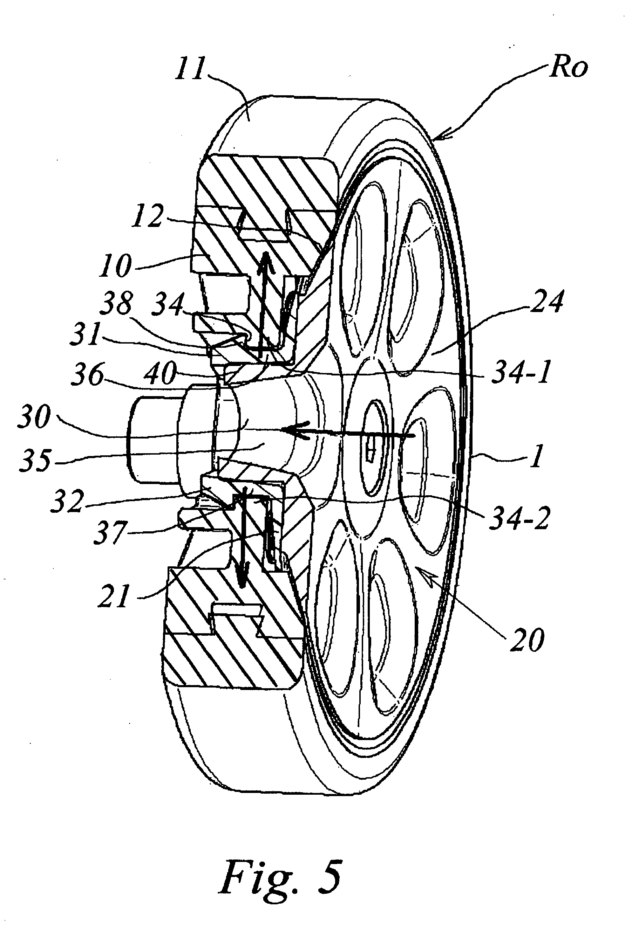

Quant à l'excroissance 40, elle est préférentiellement constituée, comme illustré sur les figures 4 et 5, par un manchon ou analogue dont la paroi latérale extérieure est conformée pour venir en appui, figure 5 en écorché, sur la face de chaque patte 36, 37 qui est opposée à celle portant l'ardillon 38, quand le flasque intermédiaire 21 est clipsé sur la face 12 du moyeu 10 et quand les ardillons sont positionnés derrière le bord 34 de la percée 30.

Les moyens 26 pour solidariser le flasque principal 24 avec le flasque intermédiaire 21 peuvent être constitués de différentes façons. Cependant, dans un mode de réalisation avantageux, ces moyens de solidarisation 26 sont réalisés pour permettre un assemblage des deux flasques 24, 21 l'un sur l'autre en préservant entre eux un certain mouvement relatif. De préférence, ces moyens de solidarisation sont constitués par au moins un point de colle 29.

Sur la figure 4 qui représente un mode de réalisation avantageux de la roulette, il est prévu six points de colle 29 situés respectivement sur les six prolongations 61, 62.

En effet, dans la description ci-dessus de la roulette selon l'invention, la roulette comporte une seule percée 30 et deux crochets 31, 32. Cependant, en général, même si la roulette ne comporte qu'une roue 1, il est préférable, tant sur le plan de la sécurité de la fixation des moyens de flasque 20 sur le moyeu 10 de cette roue 1 que sur celui de l'esthétique de la roulette, que, comme illustré sur les figures, le moyeu 10 comporte une pluralité de percées 30, le flasque intermédiaire 21 comporte une même pluralité de couples de crochets 31, 32, chaque couple de crochets étant apte à coopérer respectivement avec chaque percée 30, et le flasque principal 24 comporte une même pluralité d'excroissances 40, chaque excroissance étant apte à coopérer respectivement avec chaque couple de crochets.

Selon une réalisation préférentielle, le flasque intermédiaire 21 est en une matière plastique et le flasque principal 24 est en un matériau métallique, par exemple de l'aluminium, du zamak ou de l'acier.

La roulette selon l'invention telle que décrite ci-dessus et illustrée sur les figures annexées se monte de la façon suivante :
Il est tout d'abord supposé que les trois éléments suivants : la roue 1, le flasque intermédiaire 21 et le flasque principal 24 sont déjà préformés comme il apparaît notamment sur les figures 2 et 4, et qu'ils sont prêts à être assemblés pour réaliser une roulette Ro comme celle illustrée sur la figure 1.

Dans une première étape de montage, le flasque intermédiaire 21 est présenté devant le moyeu 10 de la roue 1, comme illustré sur la figure 2. Ces deux éléments sont alors rapprochés l'un de l'autre, selon les quatre flèches F1, jusqu'à ce que les six couples de crochet 31, 32 pénètrent respectivement dans les six percées 30.

Au cours de la pénétration, les pattes 36, 37 se plient par déformation élastique, les ardillons 38 se rapprochant l'un de l'autre en venant buter sur le bord de la percée 30. En fin de cette pénétration, les ardillons viennent se clipser sous l'action de la force de rappel élastique engendrée par chaque patte, en se plaçant derrière le bord 34 de chaque percée 30.

A la fin de cette première étape de montage, la roulette présente une configuration comme celle qui est illustrée sur la figure 3.

Dans une deuxième étape du montage, les six points de colle 29 sont alors appliqués par exemple sur la face du flasque intermédiaire 21 opposée à celle qui est au contact de la face 12 du moyeu 10.

Dans une troisième étape du montage, le flasque principal 24 est présenté devant l'assemblage obtenu en fin de la première étape et portant les points de colle, figure 4, puis déplacé par rapport à cet assemblage selon les trois flèches F2 (ou inversement ou simultanément), jusqu'à ce que les six excroissances 40 ou manchons pénètrent respectivement dans les six espaces libres inter-crochets 35, en appuyant sur les pattes 36, 37 sur les bords des percées 30, et jusqu'à ce que la face du flasque principal qui est en regard des points de colle 29 entre en contact avec ceux-ci pour se coller sur le flasque intermédiaire.

La nature de la colle utilisée sera choisie, sans difficulté pour un homme du métier, en fonction des matériaux dans lesquels sont respectivement réalisés le flasque intermédiaire 21 et le flasque principal 24.

A la description faite ci-dessus, il apparaît que la roulette selon l'invention a atteint les buts définis au préambule, à savoir essentiellement : un coût de revient relativement faible, une facilité de montage des moyens de flasque sur la roue de la roulette, et une bonne tenue aux chocs de ces moyens de flasque malgré la petite taille des roues pour ce type de roulette utilisé pour le déplacement de meubles, bagages et autres valises roulantes.

## Revendications

1. Roulette (Ro) pour faciliter le déplacement d'objets comme des meubles, bagages ou analogues, comportant :
• au moins une roue (1) comprenant un moyeu (10) d'axe (X) et une bande de roulement (11) située autour du moyeu (10),
• un flasque dit "intermédiaire" (21), et
• des moyens de clipsage (22) apte à clipser le flasque dit "intermédiaire" sur ledit moyeu (10),
**caractérisée par le fait que** les moyens de clipsage (22) du flasque dit "intermédiaire" sur ledit moyeu (10) comportent au moins une percée (30) réalisée dans le moyeu (10) et délimitée par un bord (34) comportant au moins une première et une seconde portions de bord (34-1, 34-2) ayant une direction sensiblement radiale par référence au dit axe (X) du moyeu (10), et au moins deux crochets (31, 32) montés en saillie sur le flasque (21) de façon que, lorsque le flasque (21) est clipsé sur le moyeu (10), les deux crochets (31, 32) s'accrochent, par déformation élastique, sur respectivement les première et seconde portions de bord radiales (34-1, 34-2) en définissant entre eux un espace libre inter-crochets (35).

2. Roulette selon la revendication 1, **caractérisée par le fait que** les deux dits crochets (31, 32) sont disposés respectivement sur deux prolongations (61, 62) situées à la périphérie de la partie centrale (60) du flasque (21) et sensiblement dans son plan, pour définir entre elles un espace libre sensiblement en forme de U.

3. Roulette selon l'une des revendications 1 et 2, **caractérisée par le fait que** chaque crochet (31, 32) est constitué d'une patte élastique (36, 37) solidaire du flasque par une première extrémité, et d'un ardillon (38) solidaire de la seconde extrémité de la patte (36, 37) opposée à la première extrémité, ledit ardillon étant agencé sur ladite patte pour venir se placer derrière le bord (34) de ladite percée (30).

4. Roulette selon l'une des revendications précédentes, **caractérisée par le fait que** ledit moyeu (10) comporte une pluralité de percées (30) et que ledit flasque (21) comporte une même pluralité de couples de crochets (31, 32), chaque couple de crochets étant apte à coopérer respectivement avec chaque percée (30).

5. Roulette selon l'une des revendications 1 à 4, **caractérisée par le fait qu'**elle comporte en outre :
• un flasque dit "principal" (24) apte à recouvrir ledit flasque intermédiaire (21) de façon que ledit flasque intermédiaire (21) soit interposé entre ladite face (12) du moyeu (10) et ledit flasque principal (24), et
• des moyens (26) pour solidariser ledit flasque principal (24) avec ledit flasque intermédiaire (21) quand ledit flasque principal (24) recouvre ledit flasque intermédiaire (21).

6. Roulette selon la revendication 5, **caractérisée par le fait qu'**elle comporte en outre des moyens (28) pour bloquer lesdits moyens de clipsage (22) sur ledit moyeu (10) quand ledit flasque intermédiaire (21) est clipsé sur la face (12) du moyeu (10) et que ledit flasque principal (24) recouvre le flasque intermédiaire (21) et est solidarisé avec lui.

7. Roulette selon la revendication 6, **caractérisée par le fait que** lesdits moyens (28) pour bloquer lesdits moyens de clipsage (22) sur ledit moyeu (10) comportent une excroissance (40) en saillie sur ledit flasque principal (24) et agencée de façon que, lorsque ledit flasque principal est solidarisé avec ledit flasque intermédiaire, elle se loge dans ledit espace libre inter-crochets (35) et vient au contact des deux crochets (31, 32) pour les bloquer sur le bord (34) de ladite percée (30).

8. Roulette selon la revendication 7 quand elle dépend de la revendication 3, **caractérisée par le fait que** ladite excroissance (40) est constituée sensiblement par un manchon dont la paroi latérale extérieure est conformée pour venir en appui sur lesdites pattes (36, 37) quand ledit flasque intermédiaire (21) est clipsé sur la face (12) du moyeu (10) et quand les ardillons sont positionnés derrière le bord (34) de ladite percée (30).

9. Roulette selon l'une des revendications 5 à 8, **caractérisée par le fait que** lesdits moyens (26) pour solidariser ledit flasque principal (24) avec ledit flasque intermédiaire (21) sont constitués par au moins un point de colle (29).

10. Roulette selon l'une des revendications précédentes quand elle dépend de la revendication 7, **caractérisée par le fait que** :
• ledit moyeu (10) comporte une pluralité de percées (30), que
• ledit flasque intermédiaire (21) comporte une même pluralité de couples de crochets (31, 32), chaque couple de crochets étant apte à coopérer avec une percée (30), et que
• ledit flasque principal (24) comporte une même pluralité d'excroissances (40), chaque excroissance étant apte à coopérer avec un couple de crochets (31, 32).

11. Roulette selon la revendication 5, **caractérisée par le fait que** ledit flasque intermédiaire (21) et ledit flasque principal (24) sont en des matériaux différents, ledit flasque intermédiaire (21) étant optionnellement en une matière plastique et ledit flasque principal (24) en un matériau métallique.

## Patentansprüche

1. Fußröllchen (Ro), um die Verlagerung von Gegenständen wie etwa von Möbeln, Gepackstücken oder dergleichen zu erleichtern, das Folgendes umfasst:
- wenigstens ein Rad das eine Nabe (10) mit Achse (X) und eine Lauffläche (11), die um die Nabe (1) vorgesehen ist, enthält,
- einen so genannten "Zwischen"-Flansch (21) und
- Einrastmittel (22), die dafür ausgelegt sind, den so genannten "Zwischen"-Flansch an der Nabe (10) einzurasten,
**dadurch gekennzeichnet, dass** die Mittel (22) zum Einrasten des "Zwischen"-Flansches an der Nabe (10) wenigstens einen Einschnitt (30), der in der Nabe (10) verwirklicht ist und durch einen Rand (34) begrenzt ist, der wenigstens einen ersten und einen zweiten Randabschnitt (34-1, 34-2) aufweist, die eine in Bezug auf die Achse (X) der Nabe (10) im Wesentlichen radiale Richtung haben, und wenigstens zwei Haken (31, 32), die an dem Flansch (21) vorspringend montiert sind, umfassen, derart, dass dann, wenn der Flansch (21) an der Nabe (10) eingerastet ist, die beiden Haken (31, 32) durch elastische Verformung an dem ersten bzw. dem zweiten radialen Randabschnitt (34-1, 34-2) einhaken und dazwischen einen freien Zwischenhakenraum (35) definieren.

2. Fußröllchen nach Anspruch 1, **dadurch gekennzeichnet, dass** die zwei Haken (31, 32) an zwei entsprechenden Verlängerungen (61, 62) angeordnet sind, die sich am Umfang des Mittelteils (60) des Flansches (21) und im Wesentlichen in dessen Ebene befinden, um zwischen ihnen einen freien im Wesentlichen U-förmigen Raum zu definieren.

3. Fußröllchen nach einem der Ansprüche 1 und 2, **dadurch gekennzeichnet, dass** jeder Haken (31, 32) aus einer elastischen Lasche (36, 37), die an einem ersten Ende mit dem Flansch fest verbunden ist, und aus einem Dorn (38), der mit dem zweiten Ende der Lasche (36, 37) gegenüber dem ersten Ende fest verbunden ist, gebildet ist, wobei der Dorn an der Lasche angeordnet ist, um hinter dem Rand (34) des Einschnitts (30) angeordnet zu werden.

4. Fußröllchen nach einem der vorhergehenden Ansprüche, **dadurch gekennzeichnet, dass** die Nabe (10) mehrere Einschnitte (30) aufweist und dass der Flansch (21) die gleiche Mehrzahl von Hakenpaaren (31, 32) umfasst, wobei jedes Hakenpaar dafür ausgelegt ist, mit jedem entsprechenden Einschnitt (30) zusammenzuwirken.

5. Fußröllchen nach einem der Ansprüche 1 bis 4, **dadurch gekennzeichnet, dass** es außerdem Folgendes umfasst:
- einen so genannten "Haupt"-Flansch (24), der den "Zwischen"-Flansch (21) abdecken kann, derart, dass der "Zwischen"-Flansch (21) zwischen die Fläche (12) der Nabe (10) und den "Haupt"-Flansch (24) eingefügt ist, und
- Mittel (26), um den "Haupt"-Flansch (24) und den "Zwischen"-Flansch (21) aneinander zu befestigen, wenn der "Haupt"-Flansch (24) den "Zwischen"-Flansch (21) abdeckt.

6. Fußröllchen nach Anspruch 5, **dadurch gekennzeichnet, dass** es Mittel (28) umfasst, um die Einrastmittel (22) an der Nabe (10) zu blockieren, wenn der "Zwischen"-Flansch (21) an der Fläche (12) der Nabe (10) eingerastet ist, und dass der "Haupt"-Flansch (24) den "Zwischen"-Flansch (21) abdeckt und damit fest verbunden ist.

7. Fußröllchen nach Anspruch 6, **dadurch gekennzeichnet, dass** die Mittel (28) zum Blockieren der Einrastmittel (22) an der Nabe (10) eine an dem "Haupt"-Flansch (24) vorstehende Erhebung (40) aufweisen, die so beschaffen ist, dass sie sich dann, wenn der "Haupt"-Flansch an dem "Zwischen"-Flansch fest angebracht ist, in dem freien Zwischenhakenraum (35) befindet und mit den zwei Haken (31, 32) in Kontakt gelangt, um sie an dem Rand (34) des Einschnitts (30) zu blockieren.

8. Fußröllchen nach Anspruch 7, wenn abhängig von Anspruch 3, **dadurch gekennzeichnet, dass** die Erhebung (40) im Wesentlichen durch eine Muffe gebildet ist, deren äußere Seitenwand so beschaffen ist, dass sie sich an den Laschen (36, 37) abstützt, wenn der "Zwischen"-Flansch (21) an der Fläche (12) der Nabe (10) eingerastet ist und wenn die Dome hinter dem Rand (34) des Einschnitts (30) positioniert sind.

9. Fußröllchen nach einem der Ansprüche 5 bis 8, **dadurch gekennzeichnet, dass** die Mittel (26) zum Befestigen des "Haupt"-Flansches (24) an dem "Zwischen"-Flansch (21) durch wenigstens einen Klebepunkt (29) gebildet sind.

10. Fußröllchen nach einem der vorhergehenden Ansprüche, wenn abhängig von Anspruch 7, **dadurch gekennzeichnet, dass**:
- die Nabe (10) eine Mehrzahl von Einschnitten (30) aufweist,
- der "Zwischen"-Flansch (21) die gleiche Mehrzahl von Hakenpaaren (31, 32) aufweist, wobei jedes Hakenpaar dafür ausgelegt ist, mit einem Einschnitt (30) zusammenzuwirken, und
- der "Haupt"-Flansch (24) die gleiche Mehrzahl von Erhebungen (40) aufweist, wobei jede Erhebung dafür ausgelegt ist, mit einem Hakenpaar (31, 32) zusammenzuwirken.

11. Fußröllchen nach Anspruch 5, **dadurch gekennzeichnet, dass** der "Zwischen"-Flansch (21) und der "Haupt"-Flansch (24) aus unterschiedlichen Materialien bestehen, wobei der "Zwischen"-Flansch (21) optional aus Kunststoff besteht und der "Haupt"-Flansch (24) aus einem metallischen Material besteht.

## Claims

1. A caster (Ro) for making easier to move items such as pieces of furniture, baggage, or the like, comprising:
• at least one wheel (1) comprising a hub (10) of axis (X) and a tread (11) situated around the hub (10);
• an "intermediate" cover-plate (21); and
• clip means (22) suitable for clipping the "intermediate" cover-plate to said hub (10);
**characterized by** the fact that the means (22) for clipping the "intermediate" cover-plate to said hub (10) include at least one hole (30) made in the hub (10) and defined by an edge (34) having at least first and second edge portions (34-1, 34-2) with a direction that is substantially radial relative to said axis (X) of the hub (10), and at least two hooks (31, 32) mounted projecting from the cover-plate (21) so that, when the cover-plate (21) is clipped to the hub (10), the two hooks (31, 32) deform elastically and catch respectively on the radial first and second edge portions (34-1, 34-2) while defining between them an inter-hook empty space (35).

2. A caster according to claim 1, **characterized by** the fact that said two hooks (31, 32) are arranged respectively on two extensions (61, 62) situated at the periphery of the central portion (60) of the cover-plate (21) and lying substantially in its plane, so as to define between them an empty space that is substantially U-shaped.

3. A caster according to claim 1 or claim 2, **characterized by** the fact that each hook (31, 32) is constituted by a resilient tab (36, 37) secured to the cover-plate at a first end, and by a barb (38) secured to the second end of the tab (36, 37) opposite from the first end, said barb being arranged on said tab to occupy a position behind the edge (34) of said hole (30).

4. A caster according to any preceding claim, **characterized by** the fact that said hub (10) has a plurality of holes (30) and that said cover-plate (21) has the same plurality of pairs of hooks (31, 32), each pair of hooks being suitable for co-operating respectively with each of the holes (30).

5. A caster according to any one of claims 1 to 4, **characterized by** the fact that it further comprises:
• a "main" cover-plate (24) suitable for covering said intermediate cover-plate (21) in such a manner that said intermediate cover-plate (21) is interposed between said face (12) of the hub (10) and said main cover-plate (24); and
• means (26) for securing said main cover-plate (24) with said intermediate cover-plate (21) when said main cover-plate (24) covers said intermediate cover-plate (21).

6. A caster according to claim 5, **characterized by** the fact that it further comprises means (28) for blocking said clip means (22) on said hub (10) when said intermediate cover-plate (21) is clipped to the face (12) of the hub (10) and said main cover-plate (24) covers the intermediate cover-plate (21) and is secured thereto.

7. A caster according to claim 6, **characterized by** the fact that said means (28) for blocking said clip means (22) on said hub (10) comprise a protrusion (40) projecting from said main cover-plate (24) and arranged in such a manner that, when said main cover-plate is secured to said intermediate cover-plate, it is received in said inter-hook empty space (35) and comes into contact with both hooks (31, 32) in order to block them on the edge (34) of said hole (30).

8. A caster according to claim 7 as dependent on claim 3, **characterized by** the fact that said protrusion (40) is constituted substantially by a sleeve having its outer side wall shaped to bear against said tabs (36, 37) when said intermediate cover-plate (21) is clipped to the face (12) of the hub (10) and when the barbs are positioned behind the edge (34) of said hole (30).

9. A caster according to any one of claims 5 to 8, **characterized by** the fact that said means (26) for securing said main cover-plate (24) to said intermediate cover-plate (21) are constituted by at least one spot of adhesive (29).

10. A caster according to any preceding claim as dependent on claim 7, **characterized by** the fact that:
• said hub (10) has a plurality of holes (30);
• said intermediate cover-plate (21) has the same plurality of pairs of hooks (31, 32), each pair of hooks being suitable for co-operating with a hole (30); and
• said main cover-plate (24) has the same plurality of protrusions (40), each protrusion being suitable for co-operating with a pair of hooks (31, 32).

11. A caster according to claim 5, **characterized by** the fact that said intermediate cover-plate (21) and said main cover-plate (24) are made of different materials, said intermediate cover-plate (21) optionally being made of a plastics material and said main cover-plate (24) being made of a metal material.
